# DEMANDE DE BREVET EUROPEEN

(11) **EP 1 538 767 A2**
(43) Date de publication de la demande: **08.06.2005**
(21) Numéro de dépôt: 04292814.3
(22) Date de dépôt: 29.11.2004
(51) Int. Cl.: H04J 14/02

(54) **Multiplexeur optique reconfigurable d'insertion/extraction**

(30) Priorité: 02.12.2003 FR 0314121
(71) Demandeur: ALCATEL, 75008 Paris (FR)
(72) Inventeur: Khalfallah, Sabry, 75013 Paris (FR); Bisson, Arnaud, c/o Résidence d'Orsay, 91400 Orsay (FR)
(74) Mandataire: Sciaux, Edmond

(57) **Abrégé**

Un dispositif optique de multiplexage (D) est dédié à l'insertion/extraction de ressources optiques pour une ligne de transmission optique comprenant une fibre optique amont (F1) et une fibre optique aval (F2). Le dispositif (D) comprend i) un premier (M1) et un second (M2) OMADs comportant chacun une première (EP1, EP3) entrée/sortie primaire raccordée à la fibre amont (F1) ou à la fibre aval (F2) et à L voies internes de démultiplexage (VI11, VI21) raccordées à L premières entrée/sortie secondaires (ES11, ES21), et une seconde entrée/sortie primaire (EP2, EP4) raccordée à M voies internes de multiplexage (VI12, VI22) raccordées à M secondes entrée/sortie secondaires (ES12, ES22) raccordées à M ou N modules d'émission (Tx) ou de réception (Rx), ii) L voies externes de couplage (VEC) raccordant entre elles les L premières entrée/sortie secondaires (ES11, ES21), et équipées chacune d'un VOA (MT) pouvant se placer sur ordre dans un état passant ou bloquant autorisant ou interdisant le transfert d'une ressource optique entre les premier (M1) et second (M2) OMADs, et iii) une voie externe d'extraction (VEE) raccordée à la fibre amont (F1) et à la seconde entrée/sortie primaire (EP4) du second OMAD (M2), et une voie externe d'insertion (VEI) raccordée à la fibre aval (F2) et à la seconde entrée/sortie primaire (EP2) du premier OMAD (M1).

## Description

L'invention concerne les équipements de réseau de communications, et plus précisément les dispositifs optiques de multiplexage, à insertion/extraction de ressources optiques multiplexées, installés dans des équipements constituant des noeuds d'un réseau.

On entend ici par « ressources optiques » aussi bien des longueurs d'onde que des bandes de longueurs d'onde.

Comme le sait l'homme de l'art, le transfert de ressources optiques multiplexées au sein d'un réseau est une opération complexe. Cela nécessite en général l'insertion ou l'extraction, notamment au niveau de noeuds du réseau (tels que des routeurs), de ressources ou d'informations aux ressources qui sont en cours de transfert. On utilise pour ce faire des dispositifs optiques de multiplexage à insertion/extraction de ressources optiques multiplexées raccordés, directement ou par l'intermédiaire d'un amplificateur optique, aux fibres optiques d'entrée (ou amont) et de sortie (ou aval) de lignes de transmission optique dans lesquelles circulent des ressources optiques multiplexées.

Plus précisément, un dispositif optique de ce type comporte classiquement un coupleur optique raccordé à la fibre amont afin de prélever une partie des ressources multiplexées en longueur d'onde et de la transmettre, via une première sortie, à un démultiplexeur, de type un vers N, délivrant des ressources démultiplexées sur N sorties afin qu'elles puissent être traitées localement, par exemple en vue de réceptionner les données qu'elles contiennent ou de les régénérer. La seconde sortie du coupleur alimente un système optique chargé de faire transiter les ressources qui sont destinées à la fibre optique aval et de bloquer les autres ressources.

Un tel système optique comporte généralement un démultiplexeur de type un vers N, dont les N sorties sont raccordées à N voies externes de couplage, équipées chacune d'un module de blocage de longueur d'onde, comme par exemple un module d'atténuation optique de type VOA (pour « Variable Optical Attenuator ») ou un module d'amplification de puissance de type SOA (pour « Semiconductor Optical Amplifier »), et elles-mêmes raccordées aux N entrées d'un multiplexeur de type N vers un chargé de regrouper les ressources démultiplexées. Les ressources regroupées sont ensuite transmises à une première entrée d'un second coupleur de type deux vers un, dont une seconde entrée est utilisée pour ajouter de nouvelles ressources préalablement regroupées par un autre multiplexeur, et dont la sortie alimente la fibre de sortie éventuellement par l'intermédiaire d'un amplificateur.

Un dispositif optique de multiplexage à insertion/extraction de ressources optiques multiplexées, de type classique, comporte donc deux multiplexeurs, deux démultiplexeurs, deux coupleurs et N modules d'atténuation optique, ce qui le rend onéreux et encombrant.

L'invention a donc pour but d'améliorer la situation, notamment en terme de compacité.

Elle propose à cet effet un dispositif optique de multiplexage à insertion/extraction de ressources optiques pour une ligne de transmission optique de ressources optiques multiplexées comprenant au moins une fibre optique d'entrée (ou fibre amont) et une fibre optique de sortie (ou fibre aval).

Ce dispositif optique se caractérise par le fait qu'il comprend :
- un premier moyen de multiplexage/démultiplexage comportant au moins une première entrée/sortie primaire raccordée à la fibre amont et à L (L étant supérieur ou égal à deux) voies internes de démultiplexage/multiplexage, elles-mêmes raccordées à L premières entrée/sortie secondaires, et au moins une seconde entrée/sortie primaire raccordée à M (M étant supérieur ou égal à un) voie(s) interne(s) de multiplexage/démultiplexage raccordée(s) à M seconde(s) entrée/sortie secondaire(s), elles-mêmes raccordée(s) à M module(s) d'émission et/ou de réception,
- un second moyen de multiplexage/démultiplexage comportant au moins une première entrée/sortie primaire raccordée à la fibre aval et à L voies internes de multiplexage/démultiplexage raccordées à L premières entrée/sortie secondaires, et au moins une seconde entrée/sortie primaire raccordée à N (N étant supérieur ou égal à un) voie(s) interne(s) de démultiplexage/ multiplexage raccordée(s) à N seconde(s) entrée/sortie secondaire(s) raccordée(s) à N module(s) de réception et/ou d'émission,
- L voies externes de couplage raccordant entre elles les L premières entrée/sortie secondaires des premier et second moyens de multiplexage/démultiplexage, et équipées chacune d'un moyen de traitement optique chargé de se placer sur ordre au moins dans un état passant ou un état bloquant, dans lequel il autorise ou interdit le transfert d'une ressource optique entre les premier et second moyens de multiplexage/démultiplexage,
- une voie externe d'extraction et/ou d'insertion raccordée à la fibre amont et à la seconde entrée/sortie primaire du second moyen de multiplexage/démultiplexage, et une voie externe d'insertion et/ou d'extraction raccordée à la fibre aval et à la seconde entrée/sortie primaire du premier moyen de multiplexage/démultiplexage.

De la sorte, le nombre d'éléments de multiplexage et/ou démultiplexage est réduit à deux, au lieu de quatre dans le cas d'un dispositif optique classique.

Le dispositif selon l'invention peut comporter d'autres caractéristiques qui pourront être prises séparément ou en combinaison, et notamment :
- il peut être agencé pour fonctionner de façon bidirectionnelle. Dans ce cas, chaque module d'émission et/ou de réception et chaque module de réception et/ou d'émission peut être subdivisé en un module d'émission et un module de réception raccordés chacun à une seconde entrée/sortie secondaire par l'intermédiaire d'un circulateur,
- il peut être agencé pour fonctionner de façon monodirectionnelle. Dans ce cas, les M module(s) d'émission et/ou de réception sont des modules d'émission tandis que les L module(s) de réception et/ou d'émission sont des modules de réception,
- la voie externe d'extraction et/ou d'insertion peut être raccordée à la fibre amont par l'intermédiaire d'un coupleur de type un vers deux, et la voie externe d'insertion et/ou d'extraction peut être raccordée à la fibre optique aval par l'intermédiaire d'un coupleur de type deux vers un,
- la voie externe d'extraction et/ou d'insertion et la voie externe d'insertion et/ou d'extraction peuvent être réalisées sous la forme de fibres optiques ou bien de guides d'onde en technologie planaire (notamment lorsque le dispositif est de type « tout intégré »),
- les moyens de traitement optique peuvent être des moyens d'atténuation optique variable (ou VOA) ou bien des moyens d'amplification optique à semiconducteur (ou SOA pour « Semiconductor Optical Amplifier »). Ils peuvent en outre éventuellement se placer (sur ordre) dans un état supplémentaire de transmission intermédiaire dans lequel ils autorisent le transfert avec atténuation ou amplification de puissance d'une ressource optique entre les premier et second moyens de multiplexage/démultiplexage,
- les premier et second moyens de multiplexage/démultiplexage peuvent être chacun réalisés sous la forme d'un démultiplexeur à réseau de phase, en particulier de type AWG (pour « Arrayed Waveguide Grating »), en particulier lorsque les ressources optiques sont des longueurs d'onde.

L'invention est particulièrement bien adaptée, bien que de façon non exclusive, au domaine des communications optiques, en particulier lorsque les ressources optiques sont des longueurs d'onde ou des bandes de longueurs d'onde.

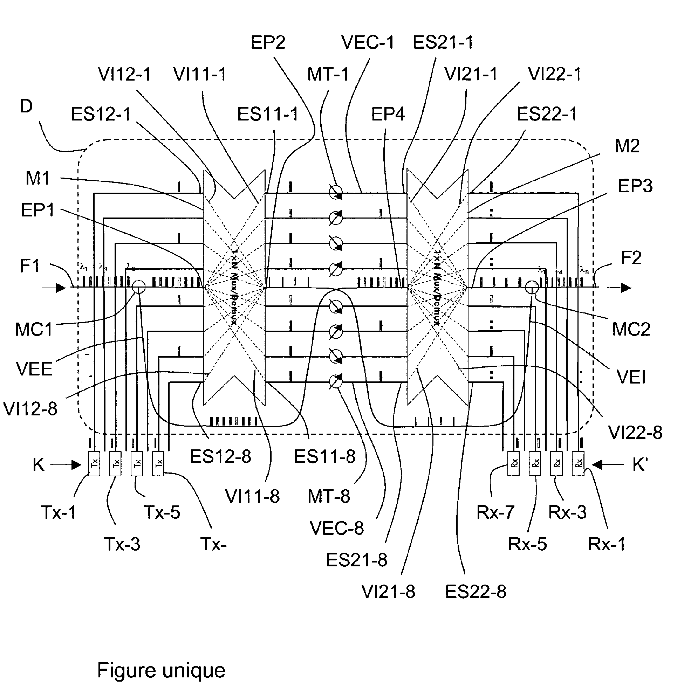

D'autres caractéristiques et avantages de l'invention apparaîtront à l'examen de la description détaillée ci-après, et du dessin annexé, sur lequel l'unique figure illustre de façon schématique un exemple de réalisation d'un dispositif optique de multiplexage à insertion/extraction de ressources optiques, selon l'invention. Le dessin annexé pourra non seulement servir à compléter l'invention, mais aussi contribuer à sa définition, le cas échéant.

L'invention a pour objet de permettre l'insertion et l'extraction de ressources optiques au sein d'une ligne de transmission de ressources optiques multiplexées appartenant, par exemple, à un réseau de communications.

Comme cela est illustré sur l'unique figure, une ligne de transmission est généralement constituée de portions de fibres optiques raccordées entre elles par l'intermédiaire d'équipements de réseau constituant des noeuds de réseau, tels que des routeurs. Chaque noeud d'un réseau est donc raccordé à au moins une fibre optique d'entrée (ou fibre amont) F1 et une fibre optique de sortie (ou fibre aval) F2 adaptées à la transmission de ressources optiques multiplexées.

Afin de permettre l'insertion et l'extraction de ressources optiques dans la ligne de transmission, le noeud (ou équipement) comporte un dispositif optique de multiplexage à insertion/extraction de ressources optiques D, selon l'invention.

On considère dans ce qui suit que les ressources optiques insérées et extraites sont des longueurs d'onde, mais il pourrait également s'agir de bandes de longueurs d'onde.

Le dispositif D comporte tout d'abord un premier M1 et un second M2 moyens de multiplexage/démultiplexage, de type bidirectionnel, assurant à la fois le démultiplexage et le multiplexage de ressources optiques. Ils constituent chacun ce que l'homme de l'art appelle un « OMAD » (pour « Optical Mux And Demux »), par exemple réalisé sous la forme d'un démultiplexeur à réseau de phase de type AWG (pour « Arrayed Waveguide Grating »).

Le dispositif D peut fonctionner soit en mode monodirectionnel, c'est-à-dire de la fibre amont F1 vers la fibre aval F2 (ou l'inverse), soit en mode bidirectionnel. Dans ce qui suit, on décrit un mode de fonctionnement monodirectionnel de la fibre amont F1 vers la fibre aval F2, correspondant à l'unique figure.

Le premier OMAD M1 comporte tout d'abord au moins une entrée primaire EP1 raccordée à la fibre amont F1 ainsi qu'à L voies internes de démultiplexage VI11-1 à VI11-L, elles-mêmes raccordées à L premières sorties secondaires ES11-1 à ES11-L. L est ici égal à huit (8), mais il peut prendre n'importe quelle valeur entière supérieure ou égale à deux (2). Ici, l'entrée primaire EP1 débouche sur la face amont (côté fibre amont F1) de l'OMAD1, tandis que les premières sorties secondaires ES11-1 à ES11-8 débouchent sur la face aval (côté fibre aval F2) dudit OMAD1.

L'expression « voie interne » ne désigne pas forcément un chemin physique ou optique, mais plutôt une correspondance entre une entrée et une sortie dépendant de la longueur d'onde, en particulier lorsque l'OMAD est de type AWG.

Le premier OMAD M1 comporte également au moins une sortie primaire EP2 raccordée à M voie(s) interne(s) de multiplexage VI12-1 à VI12-M, raccordée(s) à M seconde(s) entrées secondaire(s) ES12-1 à ES12-M, et elles-mêmes raccordée(s) à M module(s) d'émission et/ou de réception K-1 à K-M. M est ici égal à huit (8), mais il peut prendre n'importe quelle valeur entière supérieure ou égale à un (1). Ici, la sortie primaire EP2 débouche sur la face aval de l'OMAD1, tandis que les secondes entrées secondaires ES12-1 à ES12-8 débouchent sur la face amont dudit OMAD1.

Par ailleurs, les M module(s) d'émission et/ou de réception K ne sont ici que des modules d'émission Tx, du fait que le dispositif est agencé de manière à fonctionner en mode monodirectionnel. On considère en effet que les ressources optiques circulent de la fibre amont F1 vers la fibre aval F2 et non l'inverse. Mais, dans un mode de fonctionnement bidirectionnel ces modules K pourraient être chacun constitués d'un module d'émission Tx et d'un module de réception Rx. Dans le cas monodirectionnel, chaque module d'émission Tx est raccordé à une seconde entrée secondaire ES12 par un moyen de couplage tel qu'une fibre optique. Dans le cas bidirectionnel, chaque module d'émission Tx et Rx peut être raccordé à une seconde entrée/sortie secondaire ES12 par un moyen de couplage tel qu'une fibre optique, via un circulateur.

L'entrée primaire EP1 est donc ici chargée d'alimenter les 8 voies internes de démultiplexage VI11-1 à VI11-8 avec des ressources optiques multiplexées présentant les longueurs d'onde λ1 à λ8 (et « transportant » respectivement des signaux optiques S1 à S8). Et, les 8 voies internes de démultiplexage VI11-1 à VI11-8 sont chargées de démultiplexer ces ressources optiques pour délivrer sur leurs premières sorties secondaires respectives ES11-1 à ES11-8 l'une des longueurs d'onde λ1 à λ8.

Les 8 voies internes de multiplexage VI12-1 à VI12-8 sont chargées de multiplexer (ou regrouper) les ressources optiques à insérer qui présentent l'une des longueurs d'onde λ1 à λ8 (et « transportent » respectivement des signaux optiques Z1 à Z8) et qu'elles reçoivent des secondes entrées secondaires respectives ES12-1 à ES12-8 qui les reçoivent elles-mêmes des modules d'émission Tx-1 à Tx-8. Et, la sortie primaire EP2 délivre ces ressources optiques multiplexées à insérer qui présentent les longueurs d'onde λ1 à λ8 (signaux optiques Z1 à Z8).

Le second OMAD M2 comporte tout d'abord au moins une sortie primaire EP3 raccordée à la fibre aval F2 ainsi qu'à L voies internes de multiplexage VI21-1 à VI21-L, elles-mêmes raccordées à L premières entrées secondaires ES21-1 à ES21-L. Comme indiqué ci-avant, L est ici égal à huit (8). Ici, la sortie primaire EP3 débouche sur la face aval de l'OMAD M2, tandis que les premières entrées secondaires ES21-1 à ES21-8 débouchent sur la face amont dudit OMAD M2.

Le second OMAD M2 comporte également au moins une entrée primaire EP4 raccordée à N voie(s) interne(s) de démultiplexage VI22-1 à V22-N, raccordée(s) à N seconde(s) sorties secondaire(s) ES22-1 à ES22-N, et elles-mêmes raccordée(s) à N module(s) d'émission et/ou de réception K'-1 à K'-N. N est ici égal à M et donc à huit (8), mais il peut prendre n'importe quelle valeur entière supérieure ou égale à un (1). Ici, l'entrée primaire EP4 débouche sur la face amont de l'OMAD M2, tandis que les secondes sorties secondaires ES22-1 à ES22-8 débouchent sur la face aval dudit OMAD M2.

Par ailleurs, les N module(s) d'émission et/ou de réception K' ne sont ici que des modules de réception Rx, du fait que, comme indiqué ci-avant, le dispositif décrit est agencé de manière à fonctionner en mode monodirectionnel. Mais, dans un mode de fonctionnement bidirectionnel ces modules pourraient être chacun constitués d'un module d'émission Tx et d'un module de réception Rx. Dans le cas monodirectionnel, chaque module de réception Rx est raccordé à une seconde sortie secondaire ES22 par un moyen de couplage tel qu'une fibre optique. Dans le cas bidirectionnel, chaque module d'émission Tx et Rx peut être raccordé à une seconde entrée/sortie secondaire ES22 par un moyen de couplage tel qu'une fibre optique, via un circulateur.

Les premières sorties secondaires ES11-1 à ES11-8 sont respectivement raccordées aux premières entrées secondaires ES21-1 à ES21-8 par l'intermédiaire de huit (8) voies externes de couplage VEC-1 à VEC-8 équipées chacune d'un moyen de traitement optique MT-1 à MT-8.

Ces huit (8) voies externes de couplage VEC-1 à VEC-8 permettent, ici, de transférer du premier OMAD M1 vers le second OMAD M2 les ressources optiques démultiplexées par les 8 voies internes de démultiplexage VI11-1 à VI11-8 et provenant de la fibre amont F1.

Lorsque le dispositif est de type « tout intégré », les voies externes de couplage VEC peuvent être réalisées sous la forme de guides d'onde. Dans le cas contraire, les voies externes de couplage VEC peuvent être réalisées sous la forme de fibres optiques.

Chaque moyen de traitement optique MT-1 à MT-8 est un module de blocage de longueur d'onde chargé d'autoriser ou d'interdire, selon les ordres (ou instructions ou signaux) qu'il a reçus de l'équipement (ou noeud), le transfert d'une ressource optique entre les premier M1 et second M2 OMADs. En fait, ils peuvent chacun se placer au moins dans un état passant autorisant le transfert ou dans un état bloquant interdisant le transfert.

Mais, chaque moyen de traitement optique MT-1 à MT-8 peut également, éventuellement, se placer dans au moins un autre état, dit intermédiaire, dans lequel il autorise le transfert d'une ressource optique avec atténuation de puissance ou avec amplification de puissance.

Par exemple, chaque moyen de traitement optique MT-1 à MT-8 est réalisé sous la forme d'un module d'atténuation optique variable (ou VOA). En variante, chaque moyen de traitement optique MT-1 à MT-8 peut être réalisé sous la forme d'un module d'amplification optique à semiconducteur (ou SOA), ce qui lui permet d'amplifier une ressource optique à transférer.

Les 8 voies internes de multiplexage V121-1 à V121-8 sont donc ici chargées de multiplexer les ressources optiques à transférer qu'elles reçoivent respectivement des premières entrées secondaires ES21-1 à ES21-8 et qui présentent l'une des longueurs d'onde λ1 à λ8. La sortie primaire EP3 est chargée d'alimenter la fibre aval F2 en ressources optiques multiplexées présentant les longueurs d'onde λ1 à λ8 fournies par les voies internes de multiplexage VI21-1 à VI21-8.

Le dispositif selon l'invention D comporte par ailleurs une voie externe d'extraction VEE raccordée, d'une part, à la fibre amont F1 par l'intermédiaire d'un premier moyen de couplage MC1, et d'autre part, à l'entrée primaire EP4 du second OMAD M2. Compte tenu du fait que dans cet exemple le dispositif est de type monodirectionnel, la voie externe VEE est seulement dédiée à l'extraction de ressources multiplexées de la fibre amont F1. Bien entendu, dans un mode de fonctionnement bidirectionnel, elle sert aussi bien à l'extraction de ressources optiques multiplexées de la fibre amont F1 qu'à l'insertion de ressources optiques multiplexées dans la fibre amont F1.

Le premier moyen de couplage MC1 est de préférence réalisé sous la forme d'un coupleur optique de type un vers deux. Dans ce cas, son entrée est raccordée à la sortie de la fibre amont F1, tandis que ses deux sorties sont respectivement raccordées à l'entrée de la voie externe d'extraction VEE et à l'entrée primaire EP1 du premier OMAD M1.

On entend ici par « extraire des ressources optiques » le fait d'extraire classiquement une partie de la puissance des ressources optiques pour alimenter la voie externe d'extraction VEE, le reste de la puissance alimentant le premier OMAD M1. A cet effet, le coupleur MC1 est par exemple de type 3 dB.

Le dispositif selon l'invention D comporte par ailleurs une voie externe d'insertion VEI raccordée, d'une part, à la fibre aval F2 par l'intermédiaire d'un second moyen de couplage MC2, et d'autre part, à la sortie primaire EP2 du premier OMAD M1. Compte tenu du fait que dans cet exemple le dispositif est de type monodirectionnel, la voie externe VEI est seulement dédiée à l'insertion de ressources optiques multiplexées dans la fibre aval F2. Bien entendu, dans un mode de fonctionnement bidirectionnel, elle sert aussi bien à l'extraction de ressources optiques multiplexées de la fibre aval F2 qu'à l'insertion de ressources multiplexées dans la fibre aval F2.

Le second moyen de couplage MC2 est de préférence réalisé sous la forme d'un coupleur optique de type deux vers un. Dans ce cas, ses entrées sont respectivement raccordées à la sortie de la voie externe d'insertion VEI et à la sortie primaire EP3 du second OMAD M2, tandis que sa sortie est raccordée à l'entrée de la fibre aval F2.

L'entrée primaire EP4 du second OMAD M2 est donc ici chargée d'alimenter les 8 voies internes de démultiplexage VI22-1 à VI22-8 avec des ressources optiques multiplexées à extraire présentant les longueurs d'onde λ1 à λ8. Et, les 8 voies internes de démultiplexage VI22-1 à VI22-8 sont chargées de démultiplexer ces ressources optiques pour délivrer sur les secondes sorties secondaires ES22-1 à ES22-8 l'une des longueurs d'onde λ1 à λ8, afin qu'elles alimentent les modules de réception Rx-1 à Rx-8.

Par ailleurs, les ressources optiques multiplexées à insérer, présentant les longueurs d'onde λ1 à λ8 (et « transportant » respectivement les signaux optiques Z1 à Z8) et provenant des modules d'émission Tx-1 à Tx-8, sont insérées dans la fibre aval F2 par la voie externe d'insertion VEI.

La voie externe d'extraction VEE et la voie externe d'insertion VEI peuvent être réalisées soit sous la forme de fibres optiques, soit sous la forme de guides d'onde, par exemple en technologie planaire, notamment lorsque le dispositif est de type tout intégré.

L'exemple de dispositif illustré sur l'unique figure comprend deux OMADs M1 et M2 de type AWG. C'est la raison pour laquelle les entrées EP1 et EP4 et sorties EP2 et EP3 primaires sont toutes implantées au centre de leurs OMADs respectifs, tandis que les entrées ES12 et ES21 et sorties ES11 et ES22 secondaires sont implantées de part et d'autres des entrées et sorties primaires EP1 à EP4.

Comme indiqué précédemment, le dispositif D décrit ci-avant est destiné à fonctionner selon un mode monodirectionnel. Pour que ce dispositif D puisse fonctionner en mode bidirectionnel quelques aménagements doivent être effectués.

Tout d'abord, les entrées EP1 et EP4 et sorties EP2 et EP3 primaires deviennent toutes des entrée/sortie primaires.

Ensuite, les entrées ES12 et ES21 et sorties ES11 et ES22 secondaires deviennent toutes des entrée/sortie secondaires.

En outre, les voies internes de multiplexage VI12 et VI21 et les voies internes de démultiplexage VI11 et VI22 deviennent toutes des voies internes de multiplexage/démultiplexage.

Par ailleurs, la voie externe d'insertion VEI et la voie externe d'extraction VEE deviennent des voies internes d'insertion et d'extraction.

Enfin, les moyens de traitement MT équipant chaque voie externe de couplage VEC, réalisés sous la forme de VOAs ou de SOAs (ou équivalents), doivent être remplacés comme suit. Chaque voie externe de couplage VEC doit être équipée de deux circulateurs (un vers deux) entre lesquels sont intercalés sur deux voies parallèles, raccordées à leurs deux entrées/sorties, deux VOAs ou deux SOAs (ou équivalents).

On va maintenant décrire un exemple de fonctionnement monodirectionnel du dispositif selon l'invention D en référence à l'état illustré sur l'unique figure.

Dans l'état illustré, le dispositif D doit extraire les signaux S1, S3, S5 et S7 arrivant par la fibre amont F1 et présentant respectivement les longueurs d'onde λ1, λ3, λ5 et λ7, insérer des signaux Z1, Z3, Z5 et Z7 présentant respectivement les longueurs d'onde λ1, λ3, λ5 et λ7, et transférer de la fibre amont F1 vers la fibre aval F2 les signaux S2, S4, S6 et S8 présentant respectivement les longueurs d'onde λ2, λ4, λ6 et λ8.

Le dispositif D reçoit donc sur la sortie de la fibre amont F1 des ressources optiques multiplexées présentant les longueurs d'onde λ1 à λ8 et « transportant » respectivement les signaux optiques S1 à S8. Une partie de la puissance de ses ressources optiques est prélevée par le premier coupleur MC1 pour alimenter la voie externe d'extraction VEE, tandis que l'autre partie alimente l'entrée primaire EP1. Les ressources optiques (S1 à S8) sont alors démultiplexées sur les voies internes VI11-1 à VI11-8 et délivrées sur les premières sorties secondaires ES11-1 à ES11-8.

Dans le même temps, les modules d'émission Tx-1, Tx-3, Tx-5 et Tx-7 alimentent les secondes entrées secondaires ES12-1, ES12-3, ES12-5 et ES12-7 de l'OMAD 1 en ressources optiques présentant respectivement les longueurs d'onde λ1, λ3, λ5 et λ7 et transportant les signaux Z1, Z3, Z5 et Z7. Elles sont alors regroupées par les voies internes VI12-1 à VI12-8 et délivrées sous forme multiplexée au niveau de la sortie primaire EP2 de l'OMAD M1 puis injectées dans la voie externe d'insertion VEI.

La voie externe d'extraction VEE alimente l'entrée primaire EP4 de l'OMAD M2 en ressources multiplexées présentant les longueurs d'onde λ1 à λ8 et transportant respectivement les signaux optiques S1 à S8. Ces ressources optiques sont alors démultiplexées sur les voies internes VI22-1 à VI22-8 et délivrées sur les secondes sorties secondaires ES22-1 à ES22-8 en présentant respectivement les longueurs d'onde λ1 à λ8 qui transportent respectivement les signaux optiques S1 à S8. Ces ressources optiques démultiplexées alimentent alors les modules de réception Rx-1 à Rx-8, et seuls les signaux S1, S3, S5 et S7 sont alors communiqués.

Par ailleurs, seuls les signaux S2, S4, S6 et S8 devant être transférés vers la fibre aval F2, les VOAs MT-1, MT-3, MT-5 et MT-7 sont placés dans leur état bloquant, tandis que les VOAs MT-2, MT-4, MT-6 et MT-8 sont placés dans leur état passant. Ainsi, seules les ressources optiques présentant les longueurs d'onde λ2, λ4, λ6 et λ8 et transportant respectivement les signaux S2, S4, S6 et S8 parviennent au niveau des premières entrées secondaires ES21-1 à ES21-8 de l'OMAD M2. Elles sont alors regroupées par les voies internes VI21-1 à VI21-8 et délivrées sous forme multiplexée au niveau de la sortie primaire EP3 couplée à l'une des deux entrées du second coupleur MC2.

En outre, la voie externe d'insertion VEI alimente la seconde entrée du second coupleur MC2 en ressources optiques présentant les longueurs d'onde λ1, λ3, λ5 et λ7, et transportant respectivement les signaux Z1, Z3, Z5 et Z7.

Enfin, le second coupleur MC2 alimente par sa sortie l'entrée de la fibre aval F2 avec les ressources optiques multiplexées présentant respectivement les longueurs d'onde λ1 à λ8 et transportant respectivement les signaux optiques Z1, S2, Z3, S4, Z5, S6, Z7 et S8.

Bien entendu, le dispositif D peut être reconfiguré de très nombreuses manières afin de permettre l'insertion et l'extraction de toute autre combinaison que celle présentée ci-avant. Par ailleurs, il est important de noter qu'en présence de modules d'amplification (SOA) en remplacement des modules d'atténuation (VOA), il est possible d'amplifier la puissance des ressources optiques à transférer afin de compenser la portion de puissance prélevée (ou extraite) par le premier coupleur MC1 qui alimente la voie externe d'extraction VEE, ainsi qu'éventuellement les pertes introduites par le reste du dispositif.

Grâce à l'invention, on dispose d'un dispositif optique de multiplexage à insertion/extraction de ressources optiques compact, de coût réduit (et éventuellement faible en cas d'intégration), et facile à intégrer.

L'invention ne se limite pas aux modes de réalisation de dispositif optique et d'équipement de réseau décrits ci-avant, seulement à titre d'exemple, mais elle englobe toutes les variantes que pourra envisager l'homme de l'art dans le cadre des revendications ci-après.

Ainsi, dans ce qui précède on a décrit un dispositif optique de multiplexage agencé de manière à insérer et extraire des ressources optiques se présentant sous la forme de longueurs d'onde. Mais, l'invention s'applique également à l'insertion et l'extraction de ressources optiques se présentant sous la forme de bandes de longueurs d'onde. Dans ce cas, on peut notamment remplacer les premier et second moyens de multiplexage/démultiplexage (de type OMAD) par des moyens de multiplexage/démultiplexage adaptés au transfert de bandes de longueurs d'onde, du type de ceux décrits dans le document brevet WO 02/46815.

## Revendications

1. Dispositif optique de multiplexage (D) à insertion/extraction de ressources optiques pour une ligne de transmission optique de ressources optiques multiplexées comprenant au moins une fibre optique amont (F1) et une fibre optique aval (F2), **caractérisé en ce qu'**il comprend :
- un premier moyen de multiplexage/démultiplexage (M1) comportant au moins une première entrée/sortie primaire (EP1) raccordée à ladite fibre amont (F1) et à L (L>1) voies internes de démultiplexage/multiplexage (VI11) raccordées à L premières entrée/sortie secondaires (ES11), et au moins une seconde entrée/ sortie primaire (EP2) raccordée à M (M>0) voie(s) interne(s) de multiplexage/ démultiplexage (VI12) raccordée(s) à M seconde(s) entrée/sortie secondaire(s) (ES12) raccordée(s) à M module(s) d'émission et/ou de réception (K),
- un second moyen de multiplexage/démultiplexage (M2) comportant au moins une première entrée/sortie primaire (EP3) raccordée à ladite fibre aval (F2) et à L voies internes de multiplexage/démultiplexage (VI21) raccordées à L premières entrée/sortie secondaires (ES21), et au moins une seconde entrée/ sortie primaire (EP4) raccordée à N (N>0) voie(s) interne(s) de démultiplexage/ multiplexage (VI22) raccordée(s) à N seconde(s) entrée/sortie secondaire(s) (ES22) raccordée(s) à N module(s) de réception et/ou d'émission (K'),
- L voies externes de couplage (VEC) raccordant entre elles lesdites L premières entrée/sortie secondaires (ES11, ES21) des premier (M1) et second (M2) moyens de multiplexage/démultiplexage, et équipées chacune d'un moyen de traitement optique (MT) propre à se placer sur ordre dans un état parmi au moins un état passant et un état bloquant, autorisant et interdisant respectivement le transfert d'une ressource optique entre lesdits premier (M1) et second (M2) moyens de multiplexage/démultiplexage, et
- une voie externe d'extraction et/ou d'insertion (VEE) raccordée à ladite fibre amont (F1) et à ladite seconde entrée/sortie primaire (EP4) dudit second moyen de multiplexage/démultiplexage (M2), et une voie externe d'insertion et/ou d'extraction (VEI) raccordée à ladite fibre aval (F2) et à ladite seconde entrée/ sortie primaire (EP2) du premier moyen de multiplexage/démultiplexage (M1).

2. Dispositif selon la revendication 1, **caractérisé en ce qu'**il est agencé pour fonctionner de façon bidirectionnelle.

3. Dispositif selon la revendication 2, **caractérisé en ce que** chaque module d'émission et/ou de réception (K) et chaque module de réception et/ou d'émission (K') est subdivisé en un module d'émission (Tx) et un module de réception (Rx) raccordés chacun à une seconde entrée/sortie secondaire (ES) par l'intermédiaire d'un circulateur.

4. Dispositif selon la revendication 1, **caractérisé en ce que** les M module(s) d'émission et/ou de réception (K) sont des modules d'émission (Tx) et **en ce que** les L module(s) de réception et/ou d'émission (K') sont des modules de réception (Rx).

5. Dispositif selon l'une des revendications 1 à 4, **caractérisé en ce que** ladite voie externe d'extraction et/ou d'insertion (VEE) est raccordée à ladite fibre amont (F1) par l'intermédiaire d'un coupleur de type un vers deux, et ladite voie externe d'insertion et/ou d'extraction (VEI) est raccordée à ladite fibre aval (F2) par l'intermédiaire d'un coupleur (MC2) de type deux vers un.

6. Dispositif selon l'une des revendications 1 à 5, **caractérisé en ce que** ladite voie externe d'extraction et/ou d'insertion (VEE) et ladite voie externe d'insertion et/ou d'extraction (VEI) sont réalisées sous la forme de fibres optiques.

7. Dispositif selon l'une des revendications 1 à 5, **caractérisé en ce que** ladite voie externe d'extraction et/ou d'insertion (VEE) et ladite voie externe d'insertion et/ou d'extraction (VEI) sont réalisées sous la forme de guides d'onde en technologie planaire.

8. Dispositif selon l'une des revendications 1 à 7, **caractérisé en ce que** lesdits moyens de traitement optique (MT) sont des moyens d'atténuation optique variable propres à se placer sur ordre dans ledit état bloquant ou ledit état passant.

9. Dispositif selon la revendication 8, **caractérisé en ce que** chaque moyen d'atténuation optique variable (MT) est propre à se placer sur ordre dans un état de transmission intermédiaire dans lequel il autorise le transfert avec atténuation de puissance d'une ressource optique entre lesdits premier (M1) et second (M2) moyens de multiplexage/démultiplexage.

10. Dispositif selon l'une des revendications 1 à 7, **caractérisé en ce que** lesdits moyens de traitement optique (MT) sont des moyens d'amplification optique à semiconducteur propres à se placer sur ordre dans ledit état bloquant ou ledit état passant.

11. Dispositif selon la revendication 10, **caractérisé en ce que** chaque moyen d'amplification optique à semiconducteur (MT) est propre à se placer sur ordre dans un état d'amplification dans lequel il autorise le transfert avec amplification de puissance d'une ressource optique entre lesdits premier (M1) et second (M2) moyens de multiplexage/démultiplexage.

12. Dispositif selon l'une des revendications 1 à 11, **caractérisé en ce que** lesdits premier (M1) et second (M2) moyens de multiplexage/démultiplexage sont chacun réalisés sous la forme d'un démultiplexeur à réseau de phase, en particulier de type AWG.

13. Dispositif selon l'une des revendications 1 à 12, **caractérisé en ce que** lesdites ressources optiques sont des longueurs d'onde.

14. Dispositif selon l'une des revendications 1 à 12, **caractérisé en ce que** lesdites ressources optiques sont des bandes de longueurs d'onde.
